# EUROPÄISCHE PATENTSCHRIFT

(11) **EP 2 045 852 B1**
(45) Veröffentlichungstag und Bekanntmachung des Hinweises auf die Patenterteilung: **27.07.2011**
(21) Anmeldenummer: 07016158.3
(22) Anmeldetag: 17.08.2007
(51) Int. Cl.: H01M 10/0525, H01M 10/052, H01M 10/0565, B60L 1/02, B60L 3/00, H01M 10/42, H01M 10/50, H01M 10/48, H01M 2/10

(54) **Verfahren zur Kühlung eines Energiespeichers**
Method for cooling of an energy storage device
Procédé pour le refroidissement d'un accumulateur d'énergie

(43) Veröffentlichungstag der Anmeldung: 08.04.2009
(73) Patentinhaber: Carl Freudenberg KG, 69469 Weinheim (DE)
(72) Erfinder: Kritzer, Peter, 67147 Forst (DE); Raida, Hans-Joachim, Dr., 68789 St. Leon-Rot (DE)

(56) Entgegenhaltungen:
- EP-A- 0 675 013
- EP-A- 1 168 479
- EP-A- 1 906 126
- WO-A-96/16699
- DE-A1- 19 542 125

## Beschreibung

### Technisches Gebiet

Die Erfindung betrifft ein Verfahren gemäß dem Oberbegriff des Patentanspruchs 1.

### Stand der Technik

Die EP 1 906 126 A2 offenbart eine Vorrichtung zur Kühlung elektrischer Elemente. Die DE 195 42 125 A1 offenbart ein Elektrofahrzeug mit einem Heiz- und Kühlmittelkreislauf. Die EP 0 675 013 A1 und die WO 96/16695 zeigen eine Verwendung eines Kreislaufmediums als Löschmedium in Fuhvzeugen, Schließlich zeigt die EP 1 168 479 A1 eine Batterie mit einem lürchsystem,

hybrid-Auto-Batterien werden derzeit in einer großen und stark wachsenden Zahl an Serienfahrzeugen eingesetzt. Die derzeit verwendete Standard-Technologie der Batterien ist Nickel-Metallhydrid. Es ist jedoch geplant, dass dieser Batterietyp in den kommenden 3-5 Jahren größtenteils durch Lithium-lonen- bzw. Lithium-Polymer-Batterien ersetzt werden wird.

Zudem benötigen auch Fahrzeuge mit Brennstoffzellen-Antrieb leistungsfähige Energiespeicher, die die elektrochemische Trägheit der Brennstoffzelle kompensieren. In den ersten Vorserien-Fahrzeugen mit Brennstoffzellen-Antrieb werden daher gegenwärtig ebenfalls Hybrid-Auto-Batterien bzw. große Superkondensatoren eingesetzt. Mit großer Wahrscheinlichkeit werden daher zukünftige Brennstoffzellen-Serienfahrzeuge eine leistungsfähige Lithium-Batterie oder einen Superkondensator als elektrischen Energiespeicher aufweisen.

Typische Eckdaten einer solchen Hybrid-Auto-Batterie sind Spannungen von 200-300 Volt und Kapazitäten von 30-40 Ah (Energiemenge von rd. 30.000 kJ).

Nickel-Metallhydrid-Batterien weisen in der Regel als Elektrolyt ein wässriges System auf. Bei den leistungsstärkeren Lithium-Batterien werden jedoch anstelle von wässrigen Systemen polare organische Lösungsmittel verwendet, die brennbar sind und zu Fahrzeugbränden führen können.

Die erhöhte Energie pro Volumen wird unter anderem dadurch erzielt, dass bei Lithium-Batterien der die beiden Elektroden trennende Separator ziemlich dünn ausgestaltet werden kann. Ein typischer Batterie-Separator in Nickel-Metallhydrid-Batterien für die Anwendung Hybrid-Auto weist eine Dicke von 150-200 Mikrometer auf. Die Dicke eines Separators in Lithium-Batterien liegt hingegen unterhalb von 30 Mikrometern.

Als standardmäßige Separatoren für Lithium-Batterien werden derzeit ausschließlich polyolefinische Membranen verwendet. Diese Materialien verursachen momentan zwei wesentliche Sicherheitsprobleme.

Aufgrund der geringen Dicke ist es nicht auszuschließen, dass in den Separatoren vor allem bei äußerer Schädigung Risse auftreten können, die zu einem Kurzschluss der Batterien führen können. Dabei wird die komplette Energiemenge der Batterie schlagartig entladen, was katastrophale Folgen hat. Des Weiteren weisen Separatoren aus Polyolefinen eine relativ geringe thermische Stabilität auf. Das zumeist verwendete Polyethylen schmilzt bei Temperaturen von rund 130° C, zeigt aber schon bei rund 100° C einen so hohen thermischen Schrumpf, dass dadurch ein Kontakt zwischen den unterschiedlich geladenen Elektroden und dadurch ein Kurzschluss nicht auszuschließen ist. Eine Temperatur oberhalb dieses Wertes ist daher unbedingt zu vermeiden.

Für ein einwandfreies Funktionieren einer Batterie ist eine Fehlerfreiheit des Separators eine notwendige Voraussetzung. Typischerweise werden in einer Lithium-Batterie für Hybrid-Autos rund 50-80 m² Separator verwendet.

Des weiteren können Kurzschlüsse im Stromkreislauf außerhalb der Batterie zu einer sehr schnellen Entladung der Batterie führen. Hiermit geht ein erheblicher Temperaturanstieg der Batterie einher. Die Temperatur kann dabei schnell auf Werte ansteigen, die oberhalb des Schmelzpunktes des Separators liegen. Dann kann ein innerer Kurzschluss zwischen den unterschiedlich geladenen Elektroden auftreten, wobei die gesamte gespeicherte Energie sehr schnell und unkontrolliert freigesetzt wird.

Aus dem Stand der Technik ist es bekannt, vor der Batterie Schmelzsicherungen anzubringen, die im Falle eines Kurzschlusses eine Stromunterbrechung bewirken. Problematisch ist hierbei die Trägheit der Schmelzsicherungen. Es kann daher zu einem schnellen Temperaturanstieg in der Batterie kommen, bevor die Schmelzsicherung ihre Wirkung entfalten kann.

Auch innerhalb der Batterie können Kurzschlüsse auftreten, welche durch Penetration des Separators ausgelöst werden. Hierbei kann es ebenfalls zu einem schnellen Temperaturanstieg in der Batterie kommen, der mit einer Entzündung eines brennbaren Elektrolyten einhergehen kann. Um den Folgen einer solchen Penetration entgegenzuwirken, werden so genannte Abblasventile verwendet, die den brennbaren Elektrolyten möglichst rasch aus der Batterie entfemen.

Alle aus dem Stand der Technik bekannten Maßnahmen sind jedoch nicht ausreichend, um bei Energiespeichemn mit hoher Energiedichte entstehende Wärme schnell genug abzuführen. Daher kann es zu einem exponentiellen Temperaturanstieg, zur Entstehung von Bränden und im ungünstigsten Fall zu Explosionen kommen.

### Darstellung der Erfindung

Der Erfindung liegt daher die Aufgabe zugrunde, ein Verfahren zu schaffen, die das einen Energiespeicher mit hoher Energiedichte kostengünstig und zuverlässig vor kritischen Betriebszuständen schützt.

Erfindungsgemäß wird die voranstehende Aufgabe mit den Merkmalen des Patentanspruchs 1 gelöst.

Erfindungsgemäß ist erkannt worden, dass das Kreislaufmedium Heiner klimaanlage Kühlmittel genutzt werden kann, vobei eine Steuereinrichtung eine gezielte Kühlung des Energiespeichers bewirken kann, bevor dieser einen kritischen Betriebszustand erreicht. Durch Zuleiten des Kreislaufmediums zum Energiespeicher kann dieser schnell und effizient gekühlt werden, bevor ein Brand oder eine Fehlfunktion des Energiespeichers auftreten können. Auf raffinierte Weise wird die Klimaanlage, die der Klimatisierung eines Raumes dient, auch zur Brandhemmung bzw. zur Brandvorbeugung genutzt. Hierdurch können teure Brandschutzinstrumente eingespart werden.

Ein unter einem Druck stehendes gasförmiges Kreislaufmedium kann sich beim Austreten aus dem Behälter entspannen und sich hierdurch stark abkühlen. Dieser Effekt ist als positiver Joule-Thomson-Effekt bekannt. Ein Kreislaufmedium, das diesen Effekt zeigt, eignet sich zur Brandhemmung.

Die Steuereinrichtung einen Temperatursensor aufweisen. Der Temperatursensor erfasst, wenn der Energiespeicher einen kritischen Betriebszustand erreicht. Der Temperatursensor kann dann ein elektrisches Signal an eine Datenverarbeitungseinheit liefern, die eine Entscheidung darüber fällt, ob das Kreislaufmedium dem Energiespeicher zugeleitet werden soll. Die Datenverarbeitungseinheit ist ein Teil der Steuereinrichtung.

Die Steuereinrichtung einen Drucksensor aufweisen. Der Drucksensor kann wie zuvor beschrieben verwendet werden, um einen kritischen Druck innerhalb des Energiespeichers zu erfassen und dann eine Zuleitung des Kreislaufmediums zu diesem zu bewirken.

Vor diesem Hintergrund ist auch denkbar, dass die Steuereinrichtung einen Sensor aufweist, der den Ladezustand des Energiespeichers erfasst Hierduch ist sichergestellt, dass der Energiespeicher keinen unerwarteten Leistungsabfall zeigt. Die Steuereinrichtung einen Sensor aufweisen, der einen Kurzschluß erfasst. Hierdurch kann eine unkontrollierte Temperaturerhöhung vermieden werden.

Die hier beschriebene Anordnung wird effektiv zur Kühlung eines Energiespeichers genutzt.

Folglich ist die eingangs genannte Aufgabe gelöst.

Der Energiespeicher könnte als Lithium-lonen-Batterie ausgestaltet sein. Lithium-lonen-Batterien weisen einen besonders dünnen Separator zwischen den Elektroden auf und zeigen daher eine hohe Energiedichte. Als Separatomaterial werden häufig polyolefinische Membranen verwendet. Diese Membranen neigen zur Rissbildung, insbesondere wenn die Batterie äußere Schädigungen erfährt. Des weiteren zeigen polyolefinische Membranen eine relativ geringe thermische Stabilität. Das zumeist verwendete Polyethylen schmilzt bereits bei Temperaturen von 130° Celsius und zeigt schon bei etwa 100°C einen so hohen thermischen Schrumpf, dass ein Kontakt zwischen den Elektroden nicht auszuschließen ist. Daher bedürfen Lithium-lonen-Batterien einer zuverlässigen Notkühlung, um ihren technischen Vorteil - nämlich die hohe Energiedichte - sicher zu entfalten. Die Notkühlung muss Temperaturen über 100° C unbedingt vermeiden. Gerade bei Lithium-Batterien werden polare organische Lösungsmittel als Elektrolyt verwendet, die leicht brennbar sind. Häufig werden Propylencarbonat oder andere organische Carbonate verwendet.

Der Energiespeicher könnte als Lithium-Polymer-Batterie ausgestaltet sein. Dieser Batterietyp zeigt vergleichbar hohe Energiedichten wie Lithium-lonen-Batterien.

Der Energeispeicher könnte als eine weitere wiederaufladbare Batterie ausgestaltet sein, die als Elektrolyt brennbare Medien enthält. Diese basieren z.B. auf Erdalkali-Metallen bzw. anderen Alkali-Metallen. Wiederaufladbare Batterien können nach Entladung umweltfreundlich wiederverwendet werden.

Der Energiespeicher könnte als Superkondensator ausgestaltet sein. Superkondensatoren zeichnen sich durch sehr hohe Energiedichten aus, die Spannungen von 200 bis 300 V erzeugen können. Diese weisen als Dielektrikum meist ebenfalls brennbare organische Medien wie Acetonitril auf. Des weiteren werden auch in Superkondensatoren polyolefinische Membranen verwendet. Auch hier führen Überhitzung bzw. mechanische Schädigung des Separators zu einem unkontrollierten Zustand des Energiespeichers.

Das Kreislaufmedium im Behälter könnte unter einem Druck stehen, der höher als der Atmosphärendruck ist. Ein unter einem Druck stehendes gasförmiges Kreislaufmedium kann sich beim Austreten aus dem Behälter entspannen und sich hierdurch stark abkühlen. Des weiteren kann ein gasförmiges Kreislaufmedium aufgrund der Druckbelastung besonders rasch aus dem Behälter abgeleitet und dem Energiespeicher zugeführt werden.

Ein unter einem Druck stehendes gasförmiges Kreislaufmedium kann sich beim Austreten aus dem Behälter entspannen und sich hierdurch stark abkühlen. Dieser Effekt ist als positiver Joule-Thomson-Effekt bekannt. Ein Kreislaufmedium, das diesen Effekt zeigt, eignet sich zur Brandhemmung.

Das Kreislaufmedium könnte Kohlendioxid aufweisen. Kohlendioxid kühlt sich bei Entspannung stark ab und zeigt einen positiven Joule-Thompson-Effekt. Kohlendioxid zeichnet sich als umweltfreundliches Gas aus. Fluorierte Kreislaufmedien haben sich als sehr schädlich für die Ozonschicht erwiesen. Des weiteren eignet sich Kohlendioxid hervorragend für die Bekämpfung von Bränden. Daher ist es vorteilhaft, wenn das Kreislaufmedium zumindest zu 60% aus Kohlendioxid besteht.

Der Energiespeicher könnte zumindest teilweise von einer Umhüllung umgeben sein. Die Umhüllung kann einen Raum schaffen, in welchem das emittierte Kreislaufmedium einerseits gefangen ist und andererseits mit dem Energiespeicher in Kontakt treten kann. Durch diese Maßnahme wird die Kontaktzeit des Kreislaufmediums mit dem Energiespeicher erhöht. Hierdurch kann in effektiver Weise eine hohe Wärmemenge vom Energiespeichers abgegeben und von Kreislaufmedium aufgenommen werden. Insoweit realisiert die Umhüllung zusammen mit dem Kreislaufmedium und dem Energiespeicher einen Wärmetauscher.

Die Umhüllung könnte als aufblasbarer Ballon ausgestaltet sein. Diese konkrete Ausgestaltung erlaubt eine Platz sparende Anordnung der Umhüllung, die nur im Bedarfsfall ein Volumen einnimmt. Insoweit kann eine kompakt bauende Anordnung realisiert werden.

Die Steuereinrichtung könnte auch an ein sogenanntes Energiespeicher Management-System angeschlossen sein, welches den Zustand des Energiespeichers ständig überwacht. Hiermit ist sichergestellt, dass die Kühl- bzw. Löschwirkung rechtzeitig ausgelöst werden kann. Somit wird dem schnellen Temperaturanstieg im Versagensfall wirkungsvoll entgegengewirkt.

Zudem könnten ein Sensor und eine Zuleitung des Kreislaufmediums derart ausgestaltet sein, dass selektiv ein Batterie-Modul bzw. eine Batterie-Zelle gekühlt wird, welche sich in einem kritischen Zustand befindet. So könnte eine höhere Effizienz hinsichtlich der Kühlwirkung erzielt werden, da nur ein schadhafter Bereich eines Energiespeichers bzw. einer Batterie gekühlt wird.

Die Steuereinrichtung könnte ein Ventil betätigen. Hierdurch kann das Kreislaufmedium kontrolliert und auch nur teilweise aus dem Behälter abgeleitet werden.

Vor diesem Hintergrund ist denkbar, ein Dekompressionsventil einzusetzen. Diese Ventile finden in Kraftfahrzeugmotoren Verwendung und halten hohen Temperaturen stand.

Die Steuereinrichtung könnte eine Düse betätigen, die einen Sprühkopf aufweist. Hierdurch Ist eine großflächige Kühlung des Energiespeichers möglich, da der Sprühkopf das Kreislaufmedium verteilt.

Die Steuereinrichtung könnte ein Ventil oder eine Düse in Richtung einer Wärmequelle ausrichten. Hierdurch ist eine selektive Kühlung des Energiespeichers möglich, da der Brandherd oder das Zentrum der Wärmeentwicklung definiert mit Kreislaufmedium beaufschlagt werden können.

Eine Thermo-Schmelzsicherung erlaubt eine zuverlässige Ableitung des Kreislaufmediums nach Überschreiten einer bestimmten Temperatur mit mechanischen Mitteln.

Eine effiziente Kühlung könnte auch indirekt durch Verwendung von wärmeleitfähigen Bauteilen wie zB. metallische Bleche erreicht werden. Dabei könnte das stark kühlende Kreislaufmedium zunächst ein solches Bauteil kühlen, welches dem Energiespeicher zur Kühlung zugeordnet ist. Insbesondere könnte das Bauteil mit dem Energiespeicher verbunden sein oder in das Innere des Energiespeichers hineinragen.

Bei einem solchen Verfahren zur Kühlung könnten Insbesondere Zwlschenräume eines Energiespeichers gekühlt werden.

Die hier beschriebene Anordnung eignet sich besonders zur Verwendung in Hybrid-Autos, da in diesen Kraftfahrzeugen hohe Spannungen benötigt und hohe Energiemenge aus dem Energiespeicher entnommen bzw. in diesen zurückgeführt werden müssen. Daher werden in diesen Fahrzeugen Energiespeicher mit hoher Energiedichte verwendet.

Die Anordnung eignet sich des Weiteren zur Verwendung in Kraftfahrzeugen, die eine Brennstoffzelle aufweisen. Brennstoffzellen zeigen eine systembedingte elektrochemische Trägheit, die durch andere elektrische Energlespeicher mit hoher Energiedichte kompensiert werden muss. Daher werden zukünftige Kraftfahrzeuge, die Brennstoffzellen aufweisen, leistungsfähige Lithium-lonen-Batterien, Lithium-polymer-Batterien oder Superkondensatoren verwenden.

Die hier beschriebene Anordnung könnte des weiteren als Notstromenergiequelle in Flugzeugen verwendet werden, da auch dort Lithium-lonen-Batterien verwendet werden, welche bedeutend leistungsfähiger sind, als z.B. die derzeit verwendeten Nickel-Cadmium-Batterien.

Es gibt nun verschiedene Möglichkeiten, die Lehre der vorliegenden Erfindung auf vorteilhafte Weise auszugestalten und weiterzubilden. Dazu ist einerseits auf die nachgeordneten Ansprüche, andererseits auf die nachfolgende Erläuterung eines bevorzugten Ausführungsbelspiels der Erfindung anhand der Zeichnung zu verweisen.

In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine schematische Ansicht eines Kraftfahrzeugs mit einer Anordnung, die eine Klimaanlage und einen Energiespeicher aufweist, und
- Fig. 2: einen Prinzipaufbau zur Erläuterung der Arbeitsweise der hier beschriebenen Anordnung.

### Ausführung der Erfindung

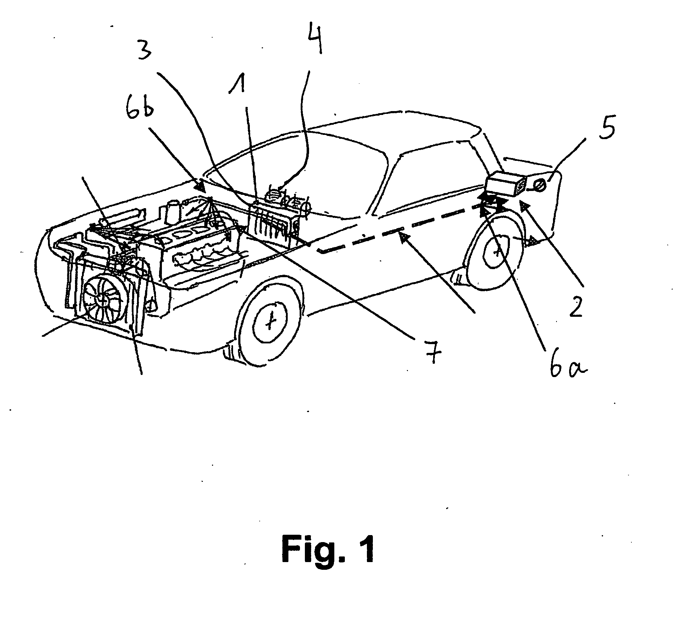

Fig. 1 zeigt ein Kraftfahrzeug mit einer Anordnung, die eine Klimaanlage 1 und einen Energiespeicher 2 umfasst. Die Klimaanlage 1 weist ein Kreislaufmedium auf, welches in einem Behälter 3 aufgenommen ist und durch eine Steuereinrichtung 4 zumindest teilweise aus dem Behälter 3 ableitbar ist. Die Steuereinrichtung 4 leitet das Kreislaufmedium dem Energiespeicher 2 zu. Das Kreislaufmedium kann den Energiespeicher 2 kühlen .

Hierzu tritt das Kreislaufmedium aus einer Düse 6a aus, um den Energiespeicher 2 anzuströmen und mit diesem in Kontakt zu treten. Hierbei kann eine Wärmemenge vom Energiespeicher 2 abgegeben und vom Kreislaufmedium aufgenommen werden.

Der Energiespeicher 2 ist als Lithium-Batterie ausgestaltet.

Das Kreislaufmedium im Behälter 3 steht unter einem Druck, der höher als der Atmosphärendruck ist. Idealerweise ist der Druck um ein Vielfaches höher als der Atmosphärendruck. Das Kreislaumedium weist mindestens 60% Kohlendioxid auf und befindet sich innerhalb des Behälters 3 zumindest teilweise in gasförmigem Zustand. Sobald das Kreislaufmedium den Behälter 3 verlässt, entspannt sich das Kreislaufmedium und nimmt eine niedrigere Temperatur an, so dass es als Kühlmittel wirken kann.

Die Steuereinrichtung 4 weist einen Temperatursensor 5 auf, der die Temperatur des Energiespeichers 2 erfasst und an eine Datenverarbeitungseinheit weiterleitet.

Die Klimaanlage 1 weist des weiteren eine Düse 6b auf, die das Kreislaufmedium aus dem Behälter 3 auf den Motorblock 7 des Kraftfahrzeugs leiten kann, um auch diesen zu kühlen

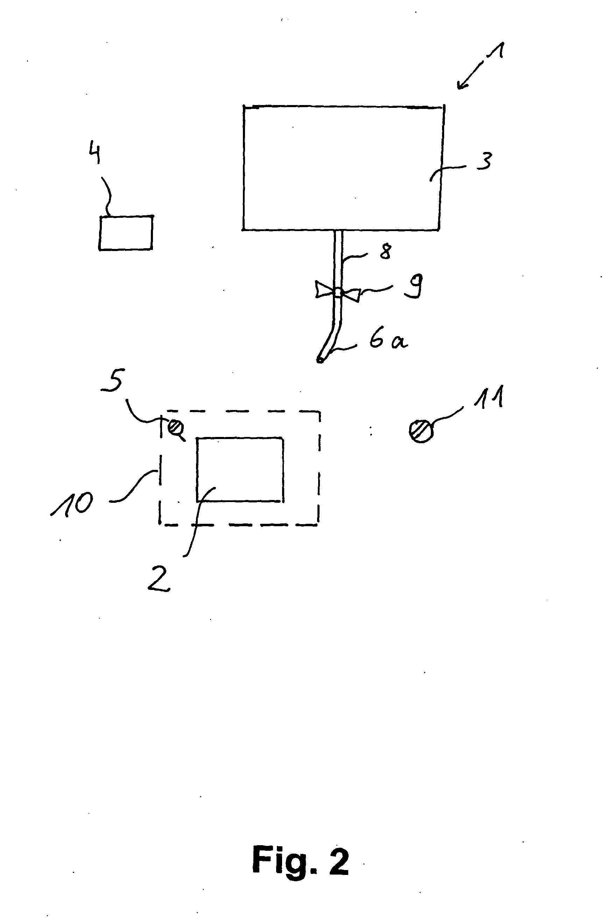

Fig. 2 einen Prinzipaufbau zur Erläuterung der Arbeitsweise der hier beschriebenen Anordnung. Die Klimaanlage 1 weist einen Behälter 3 auf, der als Kreislaufmedium Kohlendioxid aufnimmt. Das Kohlendioxid kann durch eine Leitung 8 zu einer Düse 6a gelangen. Die Leitung 8 kann durch ein Ventil 9, welches durch die Steuereinrichtung 4 betätigt wird, geöffnet oder verschlossen werden. Anstelle eines Ventils könnte auch eine Berstscheibe oder eine Drossel verwendet werden.

Die Düse 6a könnte einen Sprühkopf aufweisen, um das Kreislaufmedium großflächig auf den Energiespeicher 2 aufzubringen. Die Düse 6a ist derart beweglich ausgestaltet, dass sie sich in Richtung der größten Wärmeentwicklung ausrichten kann.
Es könnte auch nur ein Modul oder eine Zelle des Energiespeichers 2 gekühlt werden, bei der eine Fehlfunktion aufgetreten ist.

Der Energiespeicher 2 ist von einer Umhüllung 10 umgeben, welche das Kreislaufmedium einschließt, um die Kontaktzeit des Kreislaufmediums mit dem Energiespeicher 2 zu verlängern. Die Umhüllung 10 kann auch erst im Bedarfsfall erzeugt werden.

Ein Temperatursensor 5 ist in unmittelbarer Nähe des Energiespeichers 2 angeordnet, um dessen Betriebstemperatur zu erfassen. Die Steuereinrichtung 4 erfasst die Signale des Temperatursensors 5 und eines weiteren externen Sensors 11, der als Rauchmelder ausgestaltet ist Die Steuereinrichtung 4 kann das Ventil 9 öffnen oder schließen. Wenn die Steuereinrichtung 4 vom Temperatursensor 5 oder vom Sensor 11 ein Signal erhält, welches auf einen Temperaturanstieg hinweist, öffnet die Steuereinrichtung 4 das Ventil 9.

Hinsichtlich weiterer vorteilhafter Ausgestaltungen und Weiterbildungen der erfindungsgemäßen Lehre wird einerseits auf den allgemeinen Teil der Beschreibung und andererseits auf die Patentansprüche verwiesen.

Abschließend sei ganz besonders hervorgehoben, dass das zuvor rein willkürlich ausgewählte Ausführungebeispiel lediglich zur Erörterung der erfindungsgemäßen Lehre dient, diese jedoch nicht auf dieses Ausführungsbeispiel einschränkt.

## Patentansprüche

1. Verfahren zur Kühlung eines Energiespeichers (2) unter Verwendung einer Anordnung, umfassend eine Klimaanlage (1) und einen Energiespeicher (2), wobei die Klimaanlage (1) ein Kreislaufmedium aufweist, welches in einem Behälter (3) aufgenommen ist, wobei das Kreislaufmedium durch eine Steuereinrichtung (4) zumindest teilweise aus dem Behälter (3) ableitbar ist, wobei die Steuereinrichtung (4) das Kreislaufmedium der Klimaanlage (1) dem Energiespeicher (2) zuleitet und wobei das Kreislaufmedium ein Gas aufweist, welches einen positiven Joule-Thomson-Effekt zeigt und brandhemmend wirkt,
**dadurch gekennzeichnet, dass** die Steuereinrichtung (4) einen Drucksensor, einen Temperatursensor (5), der erfasst, wenn der Energiespeicher (2) einen kritischen Betriebszustand erreicht, einen Sensor, der den Ladezustand des Energiespeichers (2) erfasst, oder einen Sensor aufweist, der einen Kurzschluss erfasst, wobei die Steuereinrichtung (4) eine gezielte Kühlung des Energiespeichers (2) bewirkt, bevor dieser einen kritischen Betriebszustand erreicht, indem das Kreislaufmedium zum Energiespeicher (2) geleitet wird, damit dieser schnell und effizient gekühlt wird, bevor ein Brand des Energiespeichers (2) auftritt.

2. Verfahren nach Anspruch 1, **dadurch gekennzeichnet, dass** der Energiespeicher (2) als Lithium-lonen-Batterie ausgestaltet ist.

3. Verfahren nach Anspruch 1, **dadurch gekennzeichnet, dass** der Energiespeicher (2) als Lithium-Polymer-Batterie ausgestaltet ist.

4. Verfahren nach Anspruch 1, **dadurch gekennzeichnet, dass** der Energiespeicher (2) als wiederaufladbare Batterie ausgestaltet ist, die einen brennbaren Elektrolyten enthält.

5. Verfahren nach Anspruch 1, **dadurch gekennzeichnet, dass** der Energiespeicher (2) als Superkondensator ausgestaltet ist.

6. Verfahren nach einem der Ansprüche 1 bis 5, **dadurch gekennzeichnet, dass** das Kreislaufmedium im Behälter (3) unter einem Druck steht, der höher als der Atmosphärendruck ist.

7. Verfahren nach einem der Ansprüche 1 bis 6, **dadurch gekennzeichnet, dass** das Kreislaufmedium Kohlendioxid aufweist.

8. Verfahren nach einem der Ansprüche 1 bis 7, **dadurch gekennzeichnet, dass** der Energiespeicher (2) zumindest teilweise von einer Umhüllung (10) umgeben ist.

9. Verfahren nach Anspruch 8, **dadurch gekennzeichnet, dass** die Umhüllung (10) als aufblasbarer Ballon ausgestaltet ist.

10. Verfahren nach einem der Ansprüche 1 bis 9, **dadurch gekennzeichnet, dass** die Steuereinrichtung (4) ein Ventil (8) betätigt.

11. Verfahren nach Anspruch 10, **dadurch gekennzeichnet, dass** das Ventil (8) als Dekompressionsventil ausgestaltet ist.

12. Verfahren nach einem der Ansprüche 1 bis 11, **dadurch gekennzeichnet, dass** die Steuereinrichtung (4) eine Düse (6a) betätigt, die einen Sprühkopf aufweist.

13. Verfahren nach einem der Ansprüche 1 bis 12, **dadurch gekennzeichnet, dass** die Steuereinrichtung (4) ein Ventil (8) oder eine Düse (6a) in Richtung einer Wärmequelle ausrichtet.

14. Verfahren nach einem der Ansprüche 1 bis 13, **gekennzeichnet durch** wärmeleitfähige Bauteile, die den Energiespeicher (2) kühlen.

15. Verfahren nach einem der Ansprüche 1 bis 14, **dadurch gekennzeichnet, dass** Zwischenräume innerhalb des Energiespeichers (2) gekühlt werden.

## Claims

1. Method for cooling an energy store (2) using an arrangement comprising an air-conditioning system (1) and an energy store (2), with the air-conditioning system (1) having a circulating medium which is held in a container (3), in which case at least some of the circulating medium can be passed out of the container (3) through a control device (4), with the control device (4) passing the circulating medium in the air-conditioning system (1) to the energy store (2), and with the circulating medium having a gas which exhibits a positive Joule-Thomson effect and has a fire restricting effect,
**characterized in that** the control device (4) has a pressure sensor, a temperature sensor (5), which detects when the energy store (2) reaches a critical operating state, a sensor, which detects the state of charge of the energy store (2), or a sensor which detects a short circuit, with the control device (4) effecting targeted cooling of the energy store (2) before this reaches a critical operating state, **in that** the circulating medium is passed to the energy store (2) in order that it is cooled quickly and efficiently before a fire occurs in the energy store (2).

2. Method according to Claim 1, **characterized in that** the energy store (2) is in the form of a lithium-ion battery.

3. Method according to Claim 1, **characterized in that** the energy store (2) is in the form of a lithium-polymer battery.

4. Method according to Claim 1, **characterized in that** the energy store (2) is in the form of a rechargeable battery which contains a combustible electrolyte.

5. Method according to Claim 1, **characterized in that** the energy store (2) is in the form of a supercapacitor.

6. Method according to one of Claims 1 to 5, **characterized in that** the circulating medium in the container (3) is at a pressure which is higher than atmospheric pressure.

7. Method according to one of Claims 1 to 6, **characterized in that** the circulating medium has carbon dioxide.

8. Method according to one of Claims 1 to 7, **characterized in that** the energy store (2) is at least partially surrounded by a sheath (10).

9. Method according to Claim 8, **characterized in that** the sheath (10) is in the form of an inflatable balloon.

10. Method according to one of Claims 1 to 9, **characterized in that** the control device (4) operates a valve (8).

11. Method according to Claim 10, **characterized in that** the valve (8) is in the form of decompression valve.

12. Method according to one of Claims 1 to 11, **characterized in that** the control device (4) operates a nozzle (6a) which has a spray head.

13. Method according to one of Claims 1 to 12, **characterized in that** the control device (4) aligns a valve (8) or a nozzle (6a) in the direction of a heat source.

14. Method according to one of Claims 1 to 13, **characterized by** thermally conductive components which cool the energy store (2).

15. Method according to one of Claims 1 to 14, **characterized in that** the intermediate spaces within the energy store (2) are cooled.

## Revendications

1. Procédé de refroidissement d'un accumulateur d'énergie (2) par recours à un système qui comprend une installation de climatisation (1) et une réserve d'énergie (2),
l'installation de climatisation (1) présentant un fluide circulant qui est repris dans un récipient (3),
au moins une partie du fluide circulant pouvant être prélevée dans le récipient (3) par un dispositif de commande (4),
le dispositif de commande (4) amenant le fluide circulant de l'installation de climatisation (1) à l'accumulateur d'énergie (2) et
le fluide circulant présentant un gaz qui applique un effet de Joule-Thomson positif et exerce une action d'ignifugation,
**caractérisé en ce que**
le dispositif de commande (4) présente un détecteur de pression, un détecteur de température (5) qui détecte si l'accumulateur d'énergie (2) a atteint un état de fonctionnement critique, un détecteur qui détecte l'état de charge de l'accumulateur d'énergie (2) ou un détecteur qui détecte un court-circuit et
**en ce que** le dispositif de commande (4) provoque un refroidissement contrôlé de l'accumulateur d'énergie (2) avant que ce dernier ait atteint un état de fonctionnement critique en amenant le fluide circulant vers l'accumulateur d'énergie (2) pour refroidir ce dernier de manière rapide et efficace avant que l'accumulateur d'énergie (2) s'enflamme.

2. Procédé selon la revendication 1, **caractérisé en ce que** l'accumulateur d'énergie (2) est configuré comme batterie à ions lithium.

3. Procédé selon la revendication 1, **caractérisé en ce que** l'accumulateur d'énergie (2) est configuré comme batterie à lithium et polymère.

4. Procédé selon la revendication 1, **caractérisé en ce que** l'accumulateur d'énergie (2) est configuré comme batterie rechargeable qui contient un électrolyte inflammable.

5. Procédé selon la revendication 1, **caractérisé en ce que** l'accumulateur d'énergie (2) est configuré comme supercondensateur.

6. Procédé selon l'une des revendications 1 à 5, **caractérisé en ce que** le fluide circulant est repris dans le récipient (3) sous une pression supérieure à la pression atmosphérique.

7. Procédé selon l'une des revendications 1 à 6, **caractérisé en ce que** le fluide circulant présente du dioxyde de carbone.

8. Procédé selon l'une des revendications 1 à 7, **caractérisé en ce que** l'accumulateur d'énergie (2) est entouré au moins en partie par une enveloppe (10).

9. Procédé selon la revendication 8, **caractérisé en ce que** l'enveloppe (10) est configurée comme ballon gonflable.

10. Procédé selon l'une des revendications 1 à 9, **caractérisé en ce que** le dispositif de commande (4) actionne une soupape (8).

11. Procédé selon la revendication 10, **caractérisé en ce que** la soupape (8) est configurée comme soupape de décompression.

12. Procédé selon l'une des revendications 1 à 11, **caractérisé en ce que** le dispositif de commande (4) actionne une tuyère (6a) qui présente une tête de pulvérisation.

13. Procédé selon l'une des revendications 1 à 12, **caractérisé en ce que** le dispositif de commande (4) oriente une soupape (8) ou une tuyère (6a) en direction d'une source de chaleur.

14. Procédé selon l'une des revendications 1 à 13, **caractérisé par** des composants conducteurs de chaleur qui refroidissent l'accumulateur d'énergie (2).

15. Procédé selon l'une des revendications 1 à 14, **caractérisé en ce que** des espaces intermédiaires situés à l'intérieur de l'accumulateur d'énergie (2) sont refroidis.
